Europäisches Patentamt

European Patent Office

Office européen des brevets

(11) Veröffentlichungsnummer: **0 590 196 A1**

# EUROPÄISCHE PATENTANMELDUNG

(21) Anmeldenummer: **92116843.1**

(22) Anmeldetag: **02.10.92**

(51) Int. Cl.5: **G05B 17/02**, G05B 13/04

(43) Veröffentlichungstag der Anmeldung:
**06.04.94 Patentblatt 94/14**

(84) Benannte Vertragsstaaten:
**AT BE CH DE DK ES FR GB GR IE IT LI LU MC NL PT SE**

(71) Anmelder: **Endress + Hauser Systec GmbH + Co.**
**Klaus-Gutsch-Str. 7,**
**Postfach 1562**
**D-78615 Rottweil(DE)**

(72) Erfinder: **Häussler,wolfgang Dipl.Ing.**
**Sonnenhalde 10**
**W-7210 Rottweil 1(DE)**
Erfinder: **Springhart,Wolf Ing.**
**Oberboellen 7**
**W-7869 Boellen(DE)**
Erfinder: **Zeiss,Rainer Dipl.Phys.**
**Bachstrasse 2**
**W-7217 Wellendingen 2(DE)**

(74) Vertreter: **Morstadt, Volker, Dipl.-Ing. c/o**
**Endress + Hauser Flowtec AG**
**Kägenstrasse 7**
**Postfach 435**
**CH-4153 Reinach BL 1 (CH)**

(54) **Regeleinrichtung.**

(57) Diese Regeleinrichtung (1) dient zur Ansteuerung einer Regelstrecke (2). Dabei enthält die Regeleinrichtung (1) einen Vergleicher (3), eine diesem nachgeordnete Einstellstufe (4) für den Übertragungsbeiwert ($K_s$) als Parameter der Regelstrecke (2) und eine Nachbildung (5) der Regelstrecke (2) mit einem Speicher (51), in dem die Sprungantwort der Regelstrecke (2) und deren Übertragungsbeiwert ($K_s$) abgelegt ist. Ferner liegen dabei der Ausgang der Regelstrecke (2), gegebenenfalls über einen Meßumformer (6), an einem ersten Eingang (e1) des Vergleichers (3), der Eingang der Nachbildung (5) am Ausgang der Einstellstufe (4), der Ausgang der Nachbildung (5) an einem zweiten Eingang (e2) des Vergleichers (3) und der Ausgang der Einstellstufe (4) am Stelleingang (ec) der Regelstrecke (2). Schließlich ist einem dritten Eingang (e3) des Vergleichers (3) ein Sollwert (W) zugeführt ist und der Übertragungsbeiwert ($K_s$) sowie weitere Parameter der Regelstrecke, wie z.B. Totzeit ($T_t$), Verzugszeit ($T_u$), Ausgleichszeit ($T_g$), Ausgleichsgeschwindigkeit ($v_g$), sind an der Regeleinrichtung (1) einstellbar gemacht bzw. werden daran eingestellt.

Fig.1

EP 0 590 196 A1

Die Erfindung beschäftigt sich mit der Schaffung einer Regeleinrichtung zur Ansteuerung einer Regelstrecke, die von beliebiger technischer Art sein und die eine beliebige Übertragungscharakteristik bzw. -kennlinie haben kann. Oft ist diese Kennlinie unbekannt.

Übliche Regeleinrichtungen haben Proportional-, und/oder Integral- und/oder Differentialverhalten. Die Regeleinrichtungen werden daher auch kurz als P-, I-, PI-, oder PID-Regeleinrichtungen bezeichnet.

Diese Regeleinrichtungen werden unabhängig von ihrem Einsatz bei konkreten Regelstrecken konzipiert und hergestellt. Beim Zusammenschalten von Regeleinrichtung und Regelstrecke tritt für das Bedienungspersonal praktisch immer das Problem auf, daß die Parameter der Regeleinrichtung, wie z.B. der Proportionalbereich $X_p$, die Nachstellzeit $T_n$, die Vorhaltezeit $T_v$, unbekannt sind und ausgehend von Schätzwerten oder empirisch solange verstellt werden müssen, bis sich ein befriedigendes und gewünschtes Regelverhalten des aus der Regeleinrichtung und der Regelstrecke gebildeten Regelkreises einstellt.

Hierzu ist meist große regeltechnische Erfahrung erforderlich, da die oben genannten Parameter nur eine Aussage darüber machen, wie sich das Ausgangssignal der Regeleinrichtung zeitlich ändern soll, nicht jedoch darüber, welche Antwort die Regelstrecke darauf gibt. Der zeitliche Verlauf der Wirkung einer Einstellparameterveränderung auf die Regelstrecke ist daher wegen des geschlossenen Regelkreises nicht unmittelbar sinnfällig und entspricht insb. nicht dem Zeitverlauf dieser Veränderung.

Die in den Ansprüchen definierte Erfindung dient der Lösung diese Problems.

Die Erfindung besteht daher in einer Regelrichtung zur Ansteuerung einer Regelstrecke, wobei
- die Regeleinrichtung
-- einen Vergleicher,
-- eine diesem nachgeordnete Einstellstufe für den Übertragungsbeiwert als Parameter der Regelstrecke und
-- eine Nachbildung der Regelstrecke mit einem Speicher enthält,
--- in dem die Sprungantwort der Regelstrecke und deren Übertragungsbeiwert abgelegt ist,
- der Ausgang der Regelstrecke, gegebenenfalls über einen Meßumformer, an einem ersten Eingang des Vergleichers,
- der Eingang der Nachbildung am Ausgang der Einstellstufe,
- der Ausgang der Nachbildung an einem zweiten Eingang des Vergleichers und
- der Ausgang der Einstellstufe am Stelleingang der Regelstrecke liegt,

- einem dritten Eingang des Vergleichers ein Sollwert zugeführt ist und
- der Übertragungsbeiwert sowie weitere Parameter der Regelstrecke, wie z.B. Totzeit, Verzugszeit, Ausgleichszeit, Ausgleichsgeschwindigkeit, am Regler einstellbar gemacht sind bzw. eingestellt werden.

Ein Vorteil der Erfindung besteht darin, daß an der Regeleinrichtung nun nicht mehr deren Parameter eingestellt werden müssen, sondern solche der Regelstrecke eingestellt werden können, also solche, die auch von regeltechnisch ungeschultem oder unerfahrenem Personal leicht überprüfbar und nachvollziehbar sind.

Bei einer vorteilhaften Ausgestaltung der Erfindung ist das Zeitverhalten der im Speicher abgelegten Sprungantwort der Regelstrecke allein durch deren Verzugszeit und deren Ausgleichszeit bestimmt, und diese beiden Parameter sind am Regler einstellbar gemacht bzw. werden dort eingestellt.

Bei einer Weiterbildung der Erfindung bzw. der genannten Ausgestaltung sind die Parameter der Regelstrecke jeweils in einem wählbaren Wertebereich mit jeweils einer Unter- und einer Obergrenze einstellbar gemacht.

Diese Weiterbildung kann vorteilhaft dadurch modifiziert werden, daß eine Einrichtung vorhanden ist, die aus dem Eingangssignal und dem Ausgangssignal der Regelstrecke Signale zur jeweiligen Einstellung der Werte der Parameter innerhalb des jeweiligen Wertebereichs erzeugt.

Dabei kann es besonders vorteilhaft sein, einerseits der Einrichtung eine Alarmstufe zuzuordnen, die bei unzulässigen Änderungen der Parameter der Regelstrecke mindestens ein Alarmsignal erzeugt, oder andererseits die Signale zur jeweiligen Einstellung der Werte der Parameter innerhalb des jeweiligen Wertebereichs auf einem Display an der Regeleinrichtung selbst oder an einem davon entfernt vorgesehenen Display anzuzeigen.

Im Bedarfsfall kann auch einem weiteren Eingang des Vergleichers ein Störsignal aus der Regelstrecke zugeführt werden.

Die Erfindung wird nun anhand eines Ausführungsbeispiels unter Bezugnahme auf die Figuren der Zeichnung näher erläutert, in der gleiche Teile mit denselben Bezugszeichen versehen sind.

Fig. 1    zeigt in der Art eines Blockschaltbilds ein Ausführungsbeispiel der Erfindung,

Fig. 2    zeigt in der Art eines Blockschaltbilds eine Weiterbildung des Ausführungsbeispiels nach Fig. 1, und

Fig. 3    zeigt in der Art eines Blockschaltbilds eine Weiterbildung des Ausführungsbeispiels nach Fig. 2.

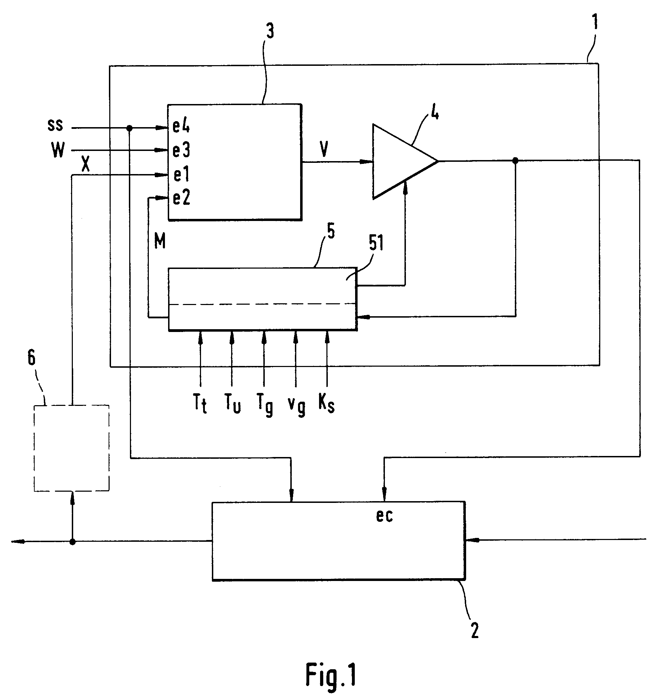

In Fig. 1 ist nach Art eines Blockschaltbilds die Zusammenschaltung einer Regeleinrichtung 1 und einer Regelstrecke 2 zu einem Regelkreis gezeigt. Dabei ist der Ausgang der Regeleinrichtung 1 mit dem Steuereingang ec der Regelstrecke 2 verbunden, oder mit anderen Worten das Ausgangssignal der Regeleinrichtung 1 ist dem Steuereingang ec zugeführt.

Falls es sich bei der Regeleinrichtung 1 um eine mittels elektronischer Schaltungen realisierte Regeleinrichtung handelt, ist dieses Ausgangssignal ein elektrisches Signal, das, falls der Steuereingang ein elektrischer ist, diesem unmittelbar zugeführt werden kann. Falls dies nicht möglich ist, ist ein entsprechender Wandler vorzusehen.

Die Regeleinrichtung 1 enthält einen Vergleicher 3 mit einem ersten Eingang e1, der mit dem Ausgang der Regelstrecke 2 verbunden ist. Im Bedarfsfall ist in diese Verbindung ein Meßumformer 6 eingefügt, der als Wandler zwischen dem physikalischen Informationsmedium des Ausgangssignals X der Regelstrecke 2 und dem physikalischen Informationsmedium des Eingangssignals des Vergleichers 3 dient, falls es sich nicht um dasselbe Informationsmedium handeln sollte.

Die Regeleinrichtung 1 enthält ferner eine Einstellstufe 4 für den Übertragungsbeiwert $K_s$. Diese Stufe hat im allgemeinen die Eigenschaften eines Verstärkers (wenn $K_s > 1$ ist) oder eines Abschwächers (wenn $K_s < 1$ ist).

Die Regeleinrichtung 1 enthält ferner eine Nachbildung 5 der Regelstrecke 2 mit einem Speicher 51, in dem die Sprungantwort der Regelstrecke 2 und deren Übertragungsbeiwert $K_s$ abgelegt ist bzw. abgelegt werden kann. Das Zeitverhalten der Sprungantwort der Regelstrecke 2 ist durch die Paramater Übertragungsbeiwert $K_s$, Totzeit $T_t$, Verzugszeit $T_u$, Ausgleichszeit $T_g$ und Ausgleichsgeschwindigkeit $v_g$ bestimmt, wobei in einfachen Fällen von Regelstrecken ein Teil dieser Parameter nicht vorliegt und daher nicht gespeichert zu werden braucht. So kann es genügen, nur die drei Parameter Übertragungsbeiwert $K_s$, Verzugszeit $T_u$ und Ausgleichszeit $T_g$ einzustellen und zu speichern.

Die bereits erwähnten Parameter der Regelstrecke 2 (Übertragungsbeiwert $K_s$, Totzeit $T_t$, Verzugszeit $T_u$, Ausgleichszeit $T_g$ und Ausgleichsgeschwindigkeit $v_g$) können durch entsprechende Eingabemittel, wie z.B. Potentiometer, Tasten etc., in den Speicher 51 und damit in die Regeleinrichtung 1 eingegeben werden, wie dies durch die entsprechend bezeichneten Eingabepfeile veranschaulicht ist.

Der Eingang der Nachbildung 5 liegt am Ausgang der Einstellstufe 4 und der Ausgang der Nachbildung 5 an einem zweiten Eingang e2 des Vergleichers 3. Somit ist das Ausgangssignal M der Nachbildung 5 diesem Eingang zugeführt. Aus dem Speicher 51 gelangt der Übertragungsbeiwert $K_s$ zur Einstellstufe 4.

Schließlich ist einem dritten Eingang e3 des Vergleichers 3 ein Sollwert W zugeführt. In Weiterbildung der Erfindung kann auch ein weiterer Eingang e4 am Vergleicher 3 vorgesehen sein, dem ein auf die Regelstrecke 2 einwirkendes Störsignal ss zuzuführen ist.

Der Vergleicher 3 bildet aus dem Ausgangssignal X der Regelstrecke 2, aus dem Ausgangssignal M der Nachbildung 5 und aus dem Sollwert W ein Vergleichssignal V nach der Beziehung:

$$V = W - X + M.$$

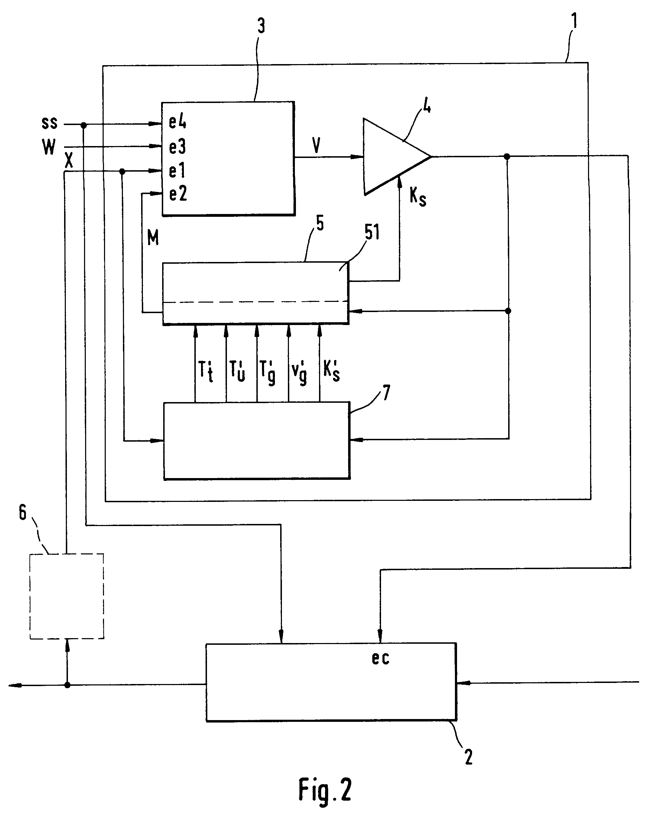

In Fig. 2. ist eine vorteilhafte Weiterbildung der Regeleinrichtung nach Fig. 1 wieder in Form eines Blockschaltbilds gezeigt. Die Weiterbildung besteht im wesentlichen darin, daß eine Einrichtung 7 vorgesehen ist, die aus dem Eingangssignal und dem Ausgangssignal der Regeleinrichtung 1 Signale $T_t'$, $T_u'$, $T_g'$, $v_g'$, $K_s'$ zur jeweiligen Einstellung der Werte der Parameter erzeugt. Dabei sind vorteilhafterweise die Parameter der Regelstrecke 2 jeweils auf einen wählbaren Wertebereich mit jeweils einer Unter- und einer Obergrenze beschränkt.

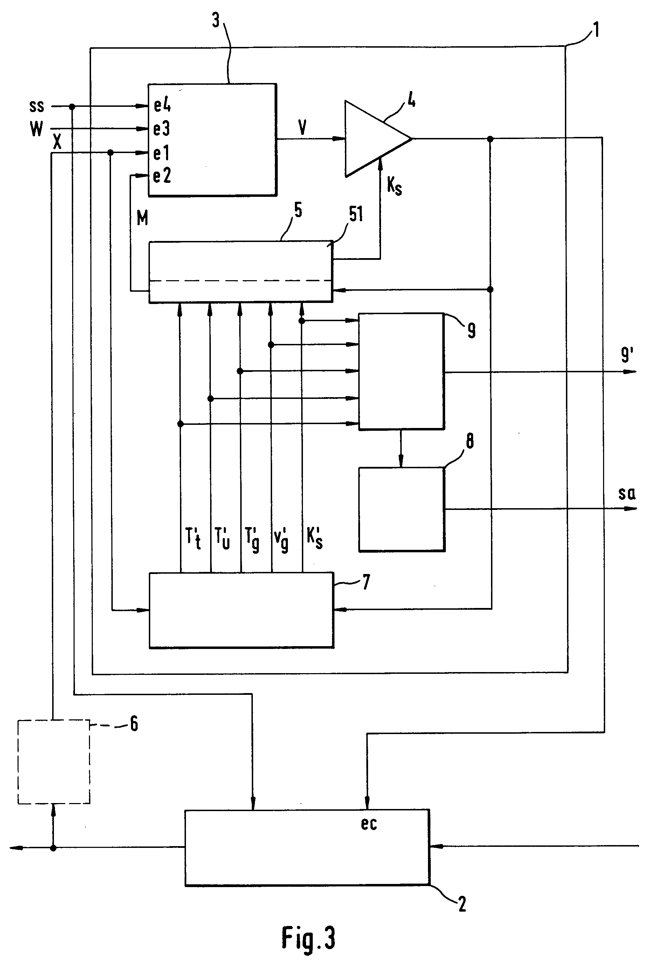

In Fig. 3 ist eine vorteilhafte Weiterbildung der Regeleinrichtung nach Fig. 2 wieder in Form eines Blockschaltbilds gezeigt. Diese Weiterbildung besteht im wesentlichen darin, daß der Einrichtung 7 eine Alarmstufe 8 und/oder ein Display 9 zugeordnet sind. Die Alarmstufe 8 erzeugt bei unzulässigen Änderungen der Parameter mindestens ein Alarmsignal sa und ist bei Fehlen des Displays 9 selbstverständlich von den einzelnen Signalen der Parameter angesteuert.

Auf dem Display 8 können die Signale zur jeweiligen Einstellung der Werte der Parameter bzw. die aktuellen Parameter innerhalb des jeweiligen Wertebereichs angezeigt werden. Es ist auch möglich, diese Anzeige an einem von der Regeleinrichtung 1 entfernt vorgesehenen Display 9' vorzunehmen. Als Display-Anordnungen eignen sich hierfür nicht nur alphanumerische Anzeigen, wie z.B. LED- oder LCD-Anzeigen, sondern auch Kurvenschreiber, Drucker etc.

In den Fig. 2 und 3 ist aus Übersichtlichkeitsgründen nicht gezeigt, daß selbstverständlich bei dieser Weiterbildung auch die Eingabemöglichkeit für die Signale $T_t$, $T_u$, $T_g$, $v_g$, $K_s$ von Fig. 1 vorgesehen ist. Allerdings brauchen diese Werte nun nur noch als Anfangswerte bei Inbetriebnahme von Regeleinrichtung und Regelstrecke eingegeben zu werden, da die Einrichtung 7 sozusagen adaptiv die weitere Optimierung der Parameter übernimmt.

**Patentansprüche**

1. Regeleinrichtung (1) zur Ansteuerung einer Regelstrecke (2), wobei
   - die Regeleinrichtung (1)
     -- einen Vergleicher (3),
     -- eine diesem nachgeordnete Einstellstufe (4) für den Übertragungsbeiwert ($K_s$) als Parameter der Regelstrecke (2) und
     -- eine Nachbildung (5) der Regelstrecke (2) mit einem Speicher (51) enthält,
        --- in dem die Sprungantwort der Regelstrecke (2) und deren Übertragungsbeiwert ($K_s$) abgelegt ist,
   - der Ausgang der Regelstrecke (2), gegebenenfalls über einen Meßumformer (6), an einem ersten Eingang (e1) des Vergleichers (3),
   - der Eingang der Nachbildung (5) am Ausgang der Einstellstufe (4),
   - der Ausgang der Nachbildung (5) an einem zweiten Eingang (e2) des Vergleichers (3) und
   - der Ausgang der Einstellstufe (4) am Stelleingang (ec) der Regelstrecke (2) liegt,
   - einem dritten Eingang (e3) des Vergleichers (3) ein Sollwert (w) zugeführt ist und
   - der Übertragungsbeiwert ($K_s$) sowie weitere Parameter der Regelstrecke, wie z.B. Totzeit ($T_t$), Verzugszeit ($T_u$), Ausgleichszeit ($T_g$), Ausgleichsgeschwindigkeit ($v_g$), an der Regeleinrichtung (1) einstellbar gemacht sind bzw. eingestellt werden.

2. Regeleinrichtung nach Anspruch 1, bei der das Zeitverhalten der im Speicher (51) abgelegten Sprungantwort der Regelstrecke (2) allein durch deren Verzugszeit ($T_u$) und deren Ausgleichszeit ($T_g$) bestimmt ist und diese beiden Parameter an der Regeleinrichtung (1) einstellbar gemacht sind bzw. eingestellt werden.

3. Regeleinrichtung nach Anspruch 1 oder 2, bei der die Parameter der Regelstrecke jeweils in einem wählbaren Wertebereich mit jeweils einer Unter- und einer Obergrenze einstellbar gemacht sind bzw. eingestellt werden.

4. Regeleinrichtung nach Anspruch 3, bei der eine Einrichtung (7) vorhanden ist, die aus dem Eingangssignal und dem Ausgangssignal der Regeleinrichtung (2) Signale ($T_t'$, $T_u'$, $T_g'$, $v_g'$, $K_s'$) zur jeweiligen Einstellung der Werte der Parameter innerhalb des jeweiligen Wertebereichs erzeugt.

5. Regeleinrichtung nach Anspruch 4, bei der der Einrichtung eine Alarmstufe (8) zugeordnet ist, die bei unzulässigen Änderungen der Parameter mindestens ein Alarmsignal (sa) erzeugt.

6. Regeleinrichtung nach Anspruch 4, bei der die Signale zur jeweiligen Einstellung der Werte der Parameter innerhalb des jeweiligen Wertebereichs auf einem Display (9) an der Regeleinrichtung (1) selbst oder an einem davon entfernt vorgesehenen Display (9') angezeigt sind.

7. Regeleinrichtung nach einem der Ansprüche 1 bis 6, bei der einem weiteren Eingang (e4) des Vergleichers (3) ein Störsignal (ss) aus der Regelstrecke (2) zugeführt ist.

Fig.1

Fig.2

EP 0 590 196 A1

**Fig.3**

Europäisches
Patentamt

**EUROPÄISCHER RECHERCHENBERICHT**

Nummer der Anmeldung

EP  92 11 6843

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 370 327 (W. LAWRENZ)<br>* Spalte 3, Zeile 44 - Spalte 4, Zeile 30; Abbildung 1 *<br>--- | 1 | G05B17/02<br>G05B13/04 |
| A | PATENT ABSTRACTS OF JAPAN<br>vol. 6, no. 221 (P-153)(1099) 5. November 1982<br>& JP-A-57 125 402 ( TOKYO SHIBAURA DENKI K.K. ) 4. August 1982<br>* Zusammenfassung *<br>--- | 1 | |
| A | AUTOMATISIERUNGSTECHNIK - AT.<br>Bd. 40, Nr. 8, August 1992, MUNCHEN DE<br>Seiten 291 - 299<br>M. KLEIN, H. WALTER, M. PANDIT 'Digitaler PI-Regler: Neue Einstellregeln mit Hilfe der Streckensprungantwort'<br>* das ganze Dokument *<br>--- | 1 | |
| A | ISA TRANSACTIONS.<br>Bd. 27, Nr. 2, 1988, PITTSBURGH US<br>Seiten 43 - 50<br>F. RADKE 'Microprocessor-based Adaptive PID-Controllers'<br>* Abbildungen 3,4 *<br>----- | 1 | **RECHERCHIERTE SACHGEBIETE (Int. Cl.5)**<br><br>G05B |

Der vorliegende Recherchenbericht wurde für alle Patentansprüche erstellt

| Recherchenort | Abschlußdatum der Recherche | Prüfer |
|---|---|---|
| DEN HAAG | 03 MAERZ 1993 | GOETZ P.A. |